# EUROPÄISCHE PATENTANMELDUNG

(11) **EP 2 505 420 A2**
(43) Veröffentlichungstag der Anmeldung: **03.10.2012**
(21) Anmeldenummer: 12161225.3
(22) Anmeldetag: 26.03.2012
(51) Int. Cl.: B60L 11/18

(54) **Steuervorrichtung für den Ladevorgang eines Elektrofahrzeugs**

(30) Priorität: 28.03.2011 DE 202011000704 U
(71) Anmelder: ABL SURSUM BAYERISCHE ELEKTROZUBEHÖR GmbH & Co. KG, 91207 Lauf (DE)
(72) Erfinder: Heindl, Peter, 90602 Pyrbaum (DE)
(74) Vertreter: Schlögl, Markus

(57) **Zusammenfassung**

Die Erfindung betrifft eine Steuervorrichtung (10) für den Ladevorgang eines Elektrofahrzeugs, das mittels eines Ladekabels (12) an einen Netzanschluss (14) gekoppelt oder koppelbar ist, so dass ein Ladestroms von dem Netzanschluss (14) über das Ladekabel (12) zu dem Elektrofahrzeug fließen kann, wobei
- der Steuervorrichtung (10) wenigstens ein Schalter (22) zum Schalten des Ladekabels (12) zugeordnet ist,
- die Steuervorrichtung (10) zum Ansteuern des Schalters (22) vorgesehen ist, und
- die Steuervorrichtung (10) über das Ladekabel (12) mit dem Elektrofahrzeug kommuniziert.

Die Erfindung ist dadurch gekennzeichnet, dass der maximale Ladestrom in oder an der Steuervorrichtung (10) einstellbar ist.

## Beschreibung

Die Erfindung betrifft eine Steuervorrichtung für den Ladevorgang eines Elektrofahrzeugs, das mittels eines Ladekabels an einen Netzanschluss gekoppelt oder koppelbar ist, so dass ein Ladestrom von dem Netzanschluss über das Ladekabel zu dem Elektrofahrzeug fließen kann, wobei der Steuervorrichtung wenigstens ein Schalter zum Schalten des Ladekabels zugeordnet ist, die Steuervorrichtung zum Ansteuern des Schalters vorgesehen ist, und die Steuervorrichtung über das Ladekabel mit dem Elektrofahrzeug kommuniziert.

Das Aufladen der Akkumulatoren von Elektrofahrzeugen erfolgt beispielsweise an einem Netzanschluss. Dabei ist der maximale Ladestrom vorgegeben. Der maximale Ladestrom hängt vom Netzanschluss sowie von der Belastbarkeit des verwendeten Ladekabels ab.

Für die Steuerung und Überwachung des Ladevorgangs ist eine Steuervorrichtung vorgesehen. Üblicherweise sind die Steuervorrichtungen jeweils an einen bestimmten maximalen Ladestrom angepasst. Für jeden Ladestrom ist somit eine spezielle Steuervorrichtung erforderlich.

Der Erfindung liegt die Aufgabe zugrunde, eine Steuervorrichtung für den Ladevorgang eines Elektrofahrzeugs bereit zu stellen, die für mehrere maximale Ladeströme verwendbar ist.

Diese Aufgabe wird durch den Gegenstand gemäß Anspruch 1 gelöst.

Gemäß der Erfindung ist vorgesehen, dass der maximale Ladestrom in oder an der Steuervorrichtung einstellbar ist.

Durch den einstellbaren maximalen Ladestrom kann die erfindungsgemäße Steuervorrichtung für Netzanschlüsse unterschiedlicher Belastbarkeit dynamisch eingestellt werden. Die Belastbarkeit des verwendeten Ladekabels wird automatisch bei der Anpassung berücksichtigt.

Vorzugsweise umfasst die Steuervorrichtung wenigstens eine Schnittstelle zum Einstellen des maximalen Ladestroms. Insbesondere ist die Schnittstelle eine standardisierte Schnittstelle, so dass der maximale Ladestrom mittels einer EDV-Einrichtung einstellbar ist.

Bei der bevorzugten Ausführungsform der Erfindung ist die Schnittstelle eine serielle Schnittstelle, beispielsweise eine standardisierte RS485-Schnittstelle.

Insbesondere ist der maximale Ladestrom als ein pulsweitenmoduliertes Signal von der Steuervorrichtung an das Elektrofahrzeug übertragbar. Auf diese Weise wird das Elektrofahrzeug über den maximal verfügbaren Ladestrom informiert.

Bei einer speziellen Ausführungsform der Erfindung kann der maximale Ladestrom aus einer Tabelle mit vorbestimmten Werten ausgewählt oder auswählbar sein. Zweckmäßigerweise kann eine solche Tabelle die Werte von 6 A, 10 A, 13 A, 16 A, 20 A, 30 A, 32 A, 63 A, 70 und/oder 80 A aufweisen.

Eine Weiterbildung sieht vor, dass die Steuervorrichtung eine Einrichtung zum Lastmanagement aufweist, die den Ladestrom innerhalb der durch den eingestellten maximalen Ladestrom und die Kapazität des Ladekabels vorgegebenen Grenze anpasst oder einstellt oder regelt. Die Grenze ist hierbei der kleinere der beiden Werte, wenn also die Kabelkapazität einen größeren Ladestrom als den eingestellte maximale Ladestrom ermöglichen würde, so ist die Grenze der eingestellte maximale Ladestrom, wenn aber der eingestellte maximale Ladestrom größer als der gemäß Leitungskapazität maximal möglichen Ladestrom ist, so ist der gemäß Leitungskapazität maximal mögliche Ladestrom die Grenze.

Vorzugsweise umfasst die Steuervorrichtung wenigstens einen Mikroprozessor. Dies ermöglicht eine besondere kompakte Steuervorrichtung.

Weiterhin kann die Steuervorrichtung wenigstens einen digitalen Eingang zum Freigeben und/oder Sperren des Ladevorgangs aufweisen.

Außerdem kann die Steuervorrichtung wenigstens eine Einrichtung zum Anzeigen von einem oder mehreren Betriebszuständen aufweisen.

Vorteilhafte Ausgestaltungen und Weiterbildungen sind in den abhängigen Ansprüchen angegeben.

Die Erfindung wird nachstehend auch hinsichtlich weiterer Merkmale und Vorteile anhand der Beschreibung eines Ausführungsbeispiels und unter Bezugnahme auf die beigefügten Zeichnungen näher erläutert. Es zeigen
- FIG 1: ein schematisches Schaltbild einer Steuervorrichtung gemäß einer bevorzugten Ausführungsform der Erfindung, und
- FIG 2: eine schematische Zweiseitenansicht eines Gehäuses für die Steuervorrichtung gemäß der bevorzugten Ausführungsform der Erfindung.

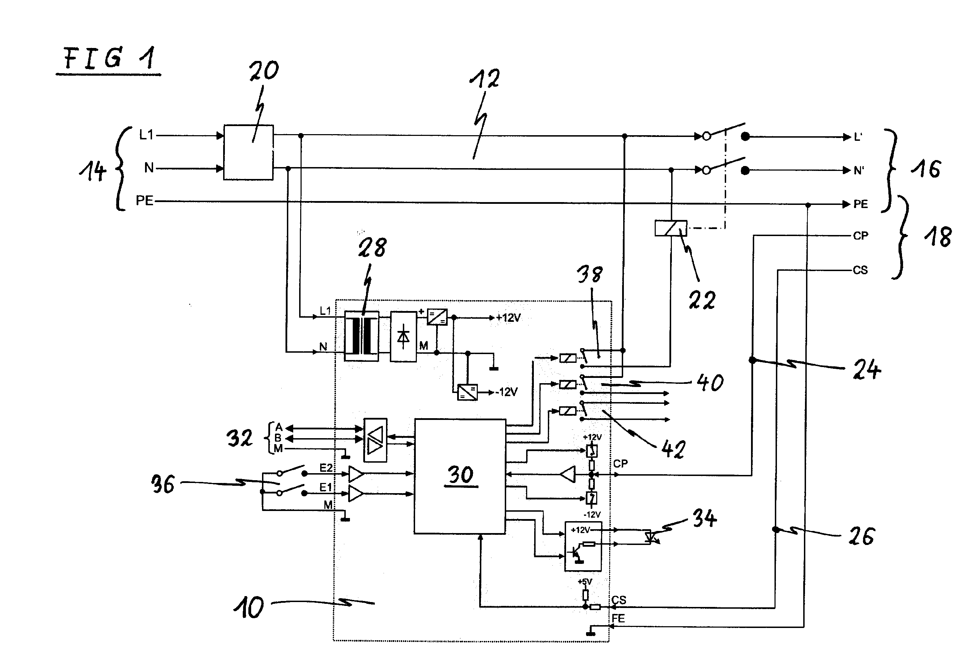

FIG 1 zeigt ein schematisches Schaltbild einer Steuervorrichtung 10 gemäß einer bevorzugten Ausführungsform der Erfindung. Die Steuervorrichtung 10 ist für die Steuerung der Versorgung eines Elektrofahrzeuges während eines Ladevorgangs vorgesehen. Weiterhin kann die Steuervorrichtung 10 zusammen mit einem Ladekabel 12 eine Baugruppe bilden, wobei die Steuervorrichtung 10 und das Ladekabel 12 lösbar oder dauerhaft miteinander verbunden sind.

In FIG 1 ist die Steuervorrichtung 10 mit dem Ladekabel 12 gekoppelt oder koppelbar. Das Ladekabel 12 verbindet einen Netzanschluss 14 mit einem Leistungsanschluss 16 des Elektrofahrzeugs. Der Netzanschluss 14 umfasst einen Leiter L1, einen Nullleiter N und einen Schutzleiter PE. In diesem Beispiel ist der Netzanschluss 14 für eine Nennspannung von 230 V oder 115 V vorgesehen. Der Leistungsanschluss 16 des Elektrofahrzeugs umfasst einen schaltbaren Leiter L', einen schaltbaren Nullleiter N' und den Schutzleiter PE. Dem Leistungsanschluss 16 ist eine Ladevorrichtung des Elektrofahrzeugs nachgeschaltet. Für den Leiter L1 und den Nullleiter N ist ein Sicherungssystem 20 vorgesehen. Das Sicherungssystem 20 weist wenigstens einen Fehlerstromschalter und/oder wenigstens einen Leitungsschutzschalter auf. Durch das Sicherungssystem 20 wird der Strom durch das Ladekabel 12 hinsichtlich Kurzschluss und/oder Überlastung überwacht. Bei einem Kurzschluss und/oder einer Überlastung werden sowohl das Elektrofahrzeug als auch die Steuervorrichtung 10 vom Netzanschluss getrennt.

Der Steuervorrichtung 10 ist ein Leistungsschalter 22 zugeordnet, durch den der schaltbare Leiter L' und der schaltbare Nullleiter N' des Leistungsanschlusses 16 am Elektrofahrzeug mit dem Leiter L1 bzw. Nullleiter N des Netzanschlusses 14 koppelbar sind. Der Leistungsschalter 22 ist durch die Steuervorrichtung 10 steuerbar.

Die Steuervorrichtung 10 ist weiterhin mit einem Steueranschluss 18 des Elektrofahrzeugs gekoppelt. Der Steueranschluss 18 des Elektrofahrzeugs umfasst einen Kommunikationsanschluss CP und einen Anschluss CS sowie den Schutzleiter PE. Somit gehört der Schutzleiter PE sowohl zum Leistungsanschluss 16 als auch zum Steueranschluss 18. Die Steuervorrichtung 10 weist ebenfalls einen korrespondierenden Kommunikationsanschluss CP und einen korrespondierenden Anschluss CS auf. Dementsprechend sind die Steuervorrichtung 10 und der Steueranschluss 18 des Elektrofahrzeugs über eine bidirektionale CP-Leitung 24 und über eine unidirektionale CS-Leitung 26 miteinander gekoppelt.

Die Kommunikation von der Steuervorrichtung 10 zu dem Elektrofahrzeug erfolgt mittels eines pulsweitenmodulierten Signals über die CP-Leitung 24. Für die Kommunikation von dem Elektrofahrzeug zu der Steuervorrichtung 10 wird das pulsweitenmodulierte Signal der Steuervorrichtung 10 durch das Elektrofahrzeug in der Amplitude moduliert. Beispielsweise kann auf diese Weise ein in oder an der Steuervorrichtung 10 eingestellter maximaler Ladestrom von der Steuervorrichtung 10 an das Elektrofahrzeug übertragen werden.

Die Steuervorrichtung 10 weist ein internes Netzteil 28 auf, das eingangsseitig mit dem Leiter L1 und dem Nullleiter N gekoppelt ist und ausgangsseitig eine Gleichspannung für die Versorgung der Steuer- und Überwachungsvorrichtung 10 bereitstellt. In diesem Beispiel werden Gleichspannungen von +12 V und -12 V bereitgestellt.

Insbesondere umfasst die Steuervorrichtung 10 einen Mikroprozessor 30. Der Mikroprozessor 30 wird von dem internen Netzteil 28 mit Gleichspannungen versorgt. Die Steuervorrichtung 10 weist eine serielle Schnittstelle 32 auf, die bidirektional mit dem Mikroprozessor 30 gekoppelt ist. In diesem Beispiel handelt es sich bei der seriellen Schnittstelle 32 um eine sogenannte RS485-Schnittstelle. Dabei handelt es sich um eine standardisierte Schnittstelle, über die die Steuervorrichtung 10 mit einer EDV-Einrichtung koppelbar ist. Die serielle Schnittstelle 32 umfasst einen ersten Anschluss A und einen zweiten Anschluss B. Ein dritter Anschluss M ist mit dem Massepotential der Steuervorrichtung 10 gekoppelt. Über die serielle Schnittstelle 32 kann der maximale Ladestrom in oder an der Steuervorrichtung 10 eingestellt werden.

Die Steuervorrichtung 10 weist mehrere Leuchtdioden 34 auf, von denen eine in FIG 1 dargestellt ist. Die Leuchtdioden 34 sind insbesondere zum Anzeigen von Betriebszuständen der Steuervorrichtung 10 vorgesehen. Beispielsweise werden Betriebszustände wie "Eingeschaltet", "Laden" oder "Fehler" angezeigt.

Weiterhin umfasst die Steuervorrichtung 10 einen ersten digitalen Eingang E1 und einen zweiten digitalen Eingang E2, denen jeweils ein Schalter 36 zugeordnet ist. Durch das Schließen des jeweiligen Schalters 36 werden die digitale Eingänge E1 bzw. E2 auf das Massepotential M der Steuervorrichtung 10 gesetzt. Die digitalen Eingänge E1 und E2 sind mit dem Mikroprozessor 30 gekoppelt. Durch das Betätigen des Schalters 36 für den digitalen Eingang E1 wird der Ladevorgang freigegeben. Der digitale Eingang E2 kann einer Überwachung einer Verriegelung einer Steckvorrichtung des Ladekabels 12 mit einer Steckdose zugeordnet sein und beispielsweise bei geöffneter Verriegelung den Ladevorgang sperren.

Schließlich weist die Steuervorrichtung 10 ausgangsseitig drei potentialfreie Schaltkontakte 38, 40 und 42 auf, die von jeweils einem Relais angesteuert werden. Die drei Relais sind eingangsseitig mit dem Mikroprozessor 30 gekoppelt und werden von diesem angesteuert. Der erste Schaltkontakt 38 ist zum Ansteuern des Leistungsschalters 22 vorgesehen. Der zweite Schaltkontakt 40 ist zum Schalten einer Belüftung vorgesehen. Der dritte Schaltkontakt 42 ist einer Verriegelung für einen Steckkontakt zugeordnet.

Die Steuervorrichtung 10 ist so eingerichtet, dass der verfügbare Ladestrom im Rahmen eines Lastmanagements innerhalb der durch den eingestellten maximalen Ladestrom und die Kabelkapazität vorgegebenen Grenze, das heißt im Intervall von Null bis zum Grenzwert, angepasst oder eingestellt oder geregelt werden kann.

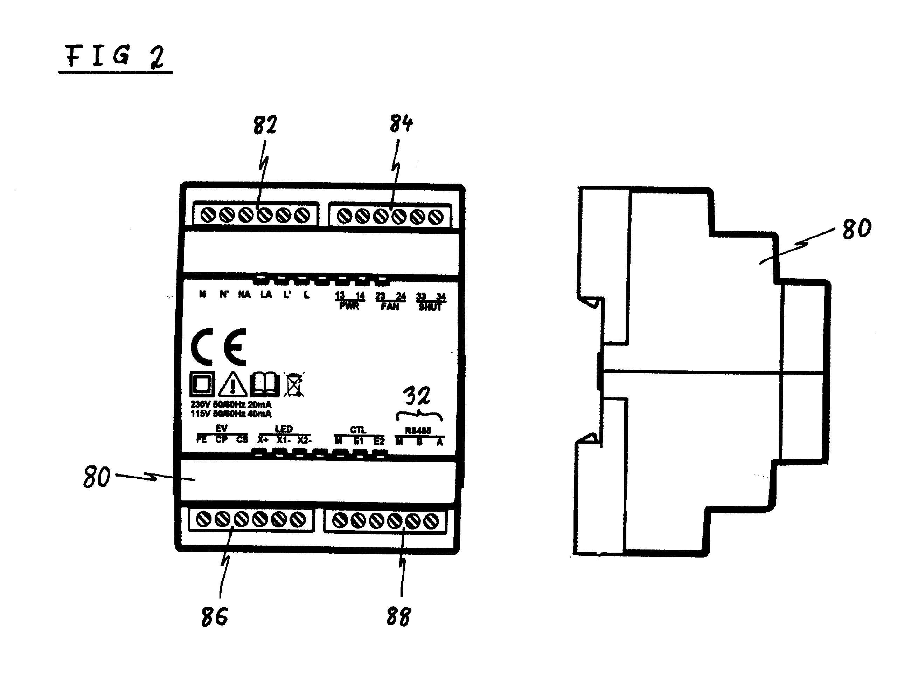

In FIG 2 ist eine schematische Zweiseitenansicht eines Gehäuses 80 für die Steuervorrichtung 10 gemäß der bevorzugten Ausführungsform der Erfindung dargestellt. Die Zweiseitenansicht umfasst eine Vorderansicht und eine Seitenansicht des Gehäuses 80. In diesem Beispiel hat das Gehäuse 80 eine Höhe von etwa 90 mm, eine Breite von etwa 72 mm und eine Tiefe von etwa 57 mm.

Das Gehäuse 80 weist vier Klemmleisten 82, 84, 86 und 88 mit jeweils sechs Anschlüssen auf. Eine erste Klemmleiste 82 weist insbesondere die Anschlüsse für den Leiter L1, den schaltbaren Leiter L', den Nullleiter N und den schaltbaren Nullleiter N' auf. Eine zweite Klemmleiste 84 weist die Anschlüsse für den Leistungsschalter 22, die Belüftung und die Verriegelung der Steckdose auf. Eine dritte Klemmleiste 86 umfasst die Anschlüsse für den Schutzleiter PE, die CP-Leitung 24, die CS-Leitung 26, und die Leuchtdioden 34. Eine vierte Klemmleiste 88 weist die Anschlüsse für das Massepotential M, den ersten digitalen Eingang E1 und den zweiten digitalen Eingang E2 auf. Außerdem umfasst die vierte Klemmleiste 88 den ersten Anschluss A, den zweiten Anschluss B und den Anschluss für das Massepotential M der seriellen Schnittstelle 32.

### Bezugszeichenliste

- 10: Steuervorrichtung
- 12: Ladekabel
- 14: Netzanschluss
- 16: Leistungsanschluss
- 18: Steueranschluss
- 20: Sicherungssystem
- 22: Leistungsschalter
- 24: CP-Leitung
- 26: CS-Leitung
- 28: internes Netzteil
- 30: Mikroprozessor
- 32: serielle Schnittstelle
- 34: Leuchtdiode
- 36: Schalter
- 38: erster Schaltkontakt
- 40: zweiter Schaltkontakt
- 42: dritter Schaltkontakt
- 80: Gehäuse
- 82: erste Klemmleiste
- 84: zweite Klemmleiste
- 86: dritte Klemmleiste
- 88: vierte Klemmleiste

- L1: Leiter
- N: Nullleiter
- PE: Schutzleiter
- L': schaltbarer Leiter
- N': schaltbarer Nullleiter
- CP: Kommunikationsanschluss
- CS: Anschluss
- E1: erster digitaler Eingang
- E2: zweiter digitaler Eingang
- M: Massepotential
- A: erster Anschluss der seriellen Schnittstelle 32
- B: zweiter Anschluss der seriellen Schnittstelle 32

## Patentansprüche

1. Steuervorrichtung (10) für den Ladevorgang eines Elektrofahrzeugs, das mittels eines Ladekabels (12) an einen Netzanschluss (14) gekoppelt oder koppelbar ist, so dass ein Ladestroms von dem Netzanschluss (14) über das Ladekabel (12) zu dem Elektrofahrzeug fließen kann, wobei
- der Steuervorrichtung (10) wenigstens ein Schalter (22) zum Schalten des Ladekabels (12) zugeordnet ist,
- die Steuervorrichtung (10) zum Ansteuern des Schalters (22) vorgesehen ist, und
- die Steuervorrichtung (10) über das Ladekabel (12) mit dem Elektrofahrzeug kommuniziert,
**dadurch gekennzeichnet, dass**
der maximale Ladestrom in oder an der Steuervorrichtung (10) einstellbar ist.

2. Steuervorrichtung nach Anspruch 1,
**dadurch gekennzeichnet, dass**
die Steuervorrichtung (10) wenigstens eine Schnittstelle (32) zum Einstellen des maximalen Ladestroms aufweist.

3. Steuervorrichtung nach Anspruch 2,
**dadurch gekennzeichnet, dass**
die Schnittstelle (32) eine standardisierte Schnittstelle ist, so dass der maximalen Ladestrom mittels einer EDV-Einrichtung einstellbar ist.

4. Steuervorrichtung nach Anspruch 2 oder 3,
**dadurch gekennzeichnet, dass**
die Schnittstelle (32) eine serielle Schnittstelle ist.

5. Steuervorrichtung nach einem der vorhergehenden Ansprüche, **dadurch gekennzeichnet, dass**
der maximale Ladestrom als ein pulsweitenmoduliertes Signal von der Steuervorrichtung (10) an das Elektrofahrzeug übertragbar ist.

6. Steuervorrichtung nach einem der vorhergehenden Ansprüche, **dadurch gekennzeichnet, dass**
der maximale Ladestrom aus einer Tabelle mit vorbestimmten Werten ausgewählt oder auswählbar ist.

7. Steuervorrichtung nach einem der vorhergehenden Ansprüche, **dadurch gekennzeichnet, dass**
die Steuervorrichtung (10) eine Einrichtung zum Lastmanagement aufweist, die den Ladestrom innerhalb der durch den eingestellten maximalen Ladestrom und die Kapazität des Ladekabels (12) vorgegebenen Grenze anpasst oder einstellt oder regelt.

8. Steuervorrichtung nach einem der vorhergehenden Ansprüche, **dadurch gekennzeichnet, dass**
die Steuervorrichtung (10) wenigstens einen Mikroprozessor (30) aufweist.

9. Steuervorrichtung nach einem der vorhergehenden Ansprüche, **dadurch gekennzeichnet, dass**
die Steuervorrichtung (10) wenigstens einen digitalen Eingang (E1, E2) zum Freigeben und/oder Sperren des Ladevorgangs aufweist.

10. Steuervorrichtung nach einem der vorhergehenden Ansprüche, **dadurch gekennzeichnet, dass**
die Steuervorrichtung (10) wenigstens eine Einrichtung (34) zum Anzeigen von einem oder mehreren Betriebszuständen aufweist.
